## Europäisches Patentamt

## European Patent Office

## Office européen des brevets

(19)

(11) Veröffentlichungsnummer: **0 045 059**
**B1**

(12) # EUROPÄISCHE PATENTSCHRIFT

(45) Veröffentlichungstag der Patentschrift:
**24.10.84**

(51) Int. Cl.³: **A 01 F 15/14**, A 01 D 59/04

(21) Anmeldenummer: **81105818.9**

(22) Anmeldetag: **23.07.81**

(54) **Schnurknüpfer für eine Ballenpresse oder dgl.**

(30) Priorität: **25.07.80 US 172307**

(43) Veröffentlichungstag der Anmeldung:
**03.02.82 Patentblatt 82/5**

(45) Bekanntmachung des Hinweises auf die Patenterteilung:
**24.10.84 Patentblatt 84/43**

(84) Benannte Vertragsstaaten:
**DE FR GB IT**

(56) Entgegenhaltungen:
**DE - B - 1 189 776**
**DK - C - 61 476**
**US - A - 2 723 871**
**US - A - 2 793 890**

**"Operator's manual" (OM-E 57832, Ausgabe B5, für Ballenpressen der Serie John Deere 466)**

(73) Patentinhaber: **DEERE & COMPANY, 1 John Deere Road, Moline Illinois 61265 (US)**

(72) Erfinder: **Verhulst, Michael Joseph, R.R. 4 Ottumwa, Iowa 52501 (US)**

(74) Vertreter: **Fricke, Joachim, Dr. et al, Dr. R. Döring, Dr. J. Fricke, Patentanwälte Josephspitalstrasse 7, D-8000 München 2 (DE)**

**Beschreibung**

Die Erfindung bezieht sich auf einen Schnurknüpfer für eine Ballenpresse oder dgl. mit einem drehbar angeordneten sichelförmigen Knüpferhaken zur Bildung einer Schnurschlaufe und einem Abstreiferarm mit einer gabelförmigen Schnurführung und einem gesonderten aus zwei Endbereichen gebildeten Abstreiferelement, das an der Schnurführung angeordnet ist.

Ein solcher Schnurknüpfer ist beispielsweise aus der US-PS 27 93 890 oder aus dem «Operator's manual» (OM-E57 832, Ausgabe B5, für Ballenpressen der Serie John Deere 466) bekannt. Die genaue Einstellung des Abstreifarmes gegenüber dem Knüpferhaken ist für die Arbeitsweise des Schnurknüpfers wesentlich, damit die Schnurschlaufe von dem Knüpferhaken zur Bildung des Knotens zuverlässig abgestreift werden kann. Die Einstellung des Abstreiferarmes erfolgt zunächst fabrikmässig und danach jeweils bei erneuter Wartung der Ballenpresse. Im bekannten Fall erfolgt diese Einstellung durch Nachbiegen des Abstreiferarmes in drei vorbestimmten Bereichen und mit Hilfe eines speziellen Werkzeuges. Der Abstreiferarm muss daher aus einem ausreichend nachformbaren oder biegsamen Material bestehen. Auf der anderen Seite soll er ausreichend steif und unnachgiebig sein, so dass die vorgenommene Einjustierung des Abstreiferarmes bis zur nächsten Wartung der Ballenpresse weitgehend erhalten bleibt. Die Steifigkeit ist auch deshalb erwünscht, weil zunehmend kräftigere Bindegarne verwendet und höhere Pressdrücke eingesetzt werden.

Gegenüber diesem bekannten Schnurknüpfer ist es Aufgabe der Erfindung den Schnurknüpfer so weiterzubilden, dass er eine ausreichende Stabilität auch gegenüber grösseren Ballendrücken und kräftigeren Schnüren besitzt und dennoch sehr genau und einfach und ohne Schwierigkeiten eine Einjustierung der Stellung des Abstreiferarmes ermöglicht.

Diese Aufgabe wird erfindungsgemäss dadurch gelöst, dass das Abstreiferelement und die Schnurführung aus nicht verformbarem Material bestehen und dass der eine Bereich des Abstreiferelementes am Scheitel der gabelförmigen Schnurführung des Abstreiferarmes unter Zwischenschaltung von Beilegelementen befestigt ist, die zur Einstellung des Abstandes zwischen Knüpferhaken und dem Vorsprung des anderen Bereiches des Abstreiferelementes auswechselbar sind.

Die Ausbildung des Abstreiferelementes und der Schnurführung aus nicht verformbarem Material liefert einen wesentlich grösseren Widerstand gegenüber zunehmenden Ballendrücken und zunehmend kräftigeren Bindegarnen. Trotz der fehlenden Verformbarkeit des Abstreiferelementes und der Schnurführung lässt sich eine sehr genaue Einstellung der relativen Lage dadurch vornehmen, dass das Abstreiferelement aus zwei Bereichen besteht, und die Befestigung mit Hilfe von auswechselbaren Beilegeelementen erfolgt. Weder die Schnurführung noch das Abstreiferelement brauchen nach ihrer Fertigstellung nochmals verformt zu werden, da für die Einjustierung eine Verformung dieser Elemente nicht erforderlich ist. Die Einjustierung des Abstreiferelementes kann sowohl fabrikmässig als auch nachträglich auf einfache Weise vorgenommen werden. Besondere Werkzeuge sind hierbei nicht erforderlich, da für die Befestigung des einen Bereiches am Scheitel der gabelförmigen Schnurführung übliche Befestigungselemente verwendet werden können.

Vorteilhafterweise ist das Abstreiferelement als Winkelteil ausgebildet und mit seinem einen Schenkel auf der Oberseite des Scheitels der Schnurführung befestigt.

Die Erfindung wird nachfolgend anhand schematischer Zeichnungen an einem Ausführungsbeispiel näher erläutert.

Es zeigen:

Figur 1 im Ausschnitt und in perspektivischer Darstellung einen Schnurknüpfer gemäss der Erfindung

Figur 2 im Ausschnitt und in Seitenansicht den Schnurknüpfer gemäss der Erfindung im grösseren Massstabe und

Figur 3 bis 7 in ähnlicher Darstellung wie Fig. 1 den Schnurknüpfer in unterschiedlichen aufeinanderfolgenden Stufen der Knotenbildung.

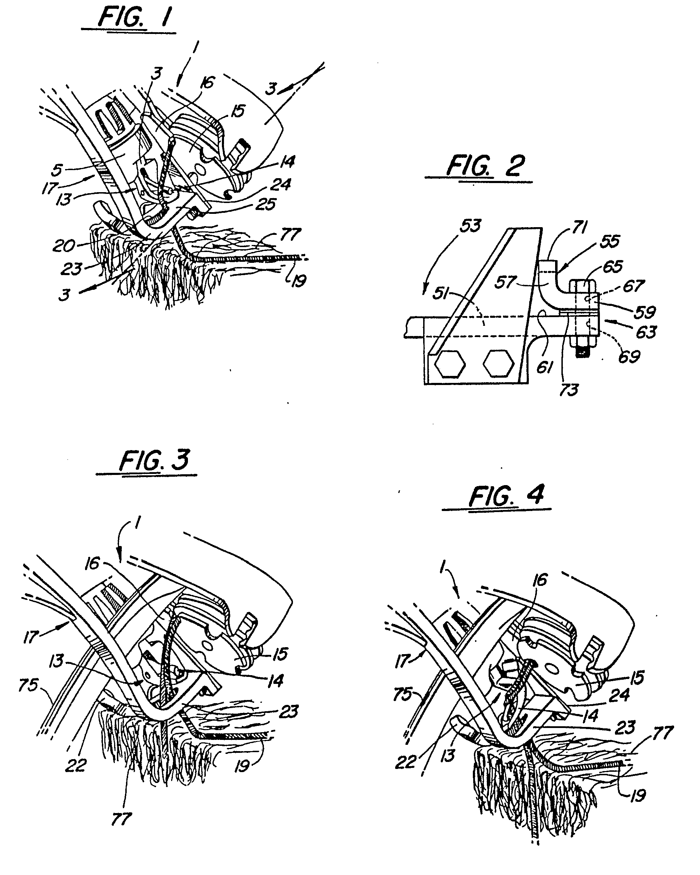

Der in Figur 1 gezeigte Schnurknüpfer 1 gleicht in seinem allgemeinen Aufbau im wesentlichen dem eingangs erläuterten bekannten Schnurknüpfer, der in Ballenpressen zum Herstellen von Heu- oder Strohballen in Rechteckform eingesetzt werden kann.

Der Knüpfer 1 umfasst einen sichelförmigen Knüpferhaken 13 mit einem zentralen Schaft 3, der in einem entsprechenden Rahmen 5 rotierbar gehalten ist. Der Knüpfer umfasst weiterhin einen Backen 14, der beweglich gegenüber dem Knüpferhaken 13 angeordnet ist. Um den Knüpferhaken wird eine Schnurschlaufe gebildet, wenn der Haken rotiert, wobei das Schnurende während der Knotenbildung festgehalten wird. Auf einer Seite des Knüpferhakens 13 sind eine Schnurscheibe 15 und ein Schnurhalter 16 vorgesehen, um einen Abschnitt der Schnur 19 festzuhalten. Auf der entgegengesetzten Seite und unterhalb des Knüpferhakens ist ein Abstreiferarm 17 angeordnet, von dem in Fig. 2 nur ein Armabschnitt 53 gezeigt ist. Dieser Abstreiferarm umfasst eine gabelförmige Schnurführung 20, die bevorzugt aus Gusseisen besteht eine Schneidklinge 24, die an der Schnurführung 20 angeschraubt ist, um die Schnur durchzuschneiden und ein Abstreiferelement, das in Fig. 2 mit 55 bezeichnet ist und mit dem die Schnurschlaufe von dem Knüpferhaken 13 abstreifbar ist. Die Schnurführung 20 weist zwei Finger 22, 23 auf, zwischen denen die Schnur 19 aufgenommen und geführt ist. Ein Scheitel 25 verbindet die beiden Finger 22 und 23. In Fig. 2 ist der Scheitel bei 51 angedeutet, wobei seine nach oben weisende Hauptfläche mit 61 bezeichnet ist. Die Schnurführung 20 kann entweder durch Giessen oder Schmieden hergestellt werden und ist in jedem Fall eine Komponente hoher Festigkeit und hoher Steifigkeit.

Das Abstreiferelement 55 ist als gesonderter Teil, z.B. aus einsatzgehärtetem Stahl ausgebildet. Es weist zwei Bereiche oder Teile 57,59 auf, die zusammen einen rechten Winkelteil bilden, der mit seinem einen Schenkel 59 auf der Hauptfläche 61 des Scheitels 51 der Schnurführung 20 befestigt ist. Zur Befestigung dient eine Verbindungseinrichtung 63, die im dargestellten Beispiel aus zwei Bolzen gebildet ist, von denen nur der vordere Bolzen 65 in Fig. 2 erkennbar ist. Die beiden Bolzen ragen durch Öffnungen 67 und 69 des Abstreiferelementes 55 bzw. des Scheitels 51. Eine Einjustierung der Höhe eines Vorsprunges 71 des Abstreiferelementes 55 über der Hauptfläche 61 wird durch Einsetzen oder Entfernen von Beilegeleementen 73, z.B. von Unterlegscheiben erreicht, die zwischen der Hauptfläche 61 und dem Bereich 59 des Abstreiferelementes 55 auf die Bolzen aufgefädelt sind.

Die Funktion des Knüpfers bei der Umbindung eines Heuballens ist üblich und wird nachfolgend nur kurz beschrieben. Dabei wird Bezug genommen insb. auf die Figuren 1 und 3 bis 7.

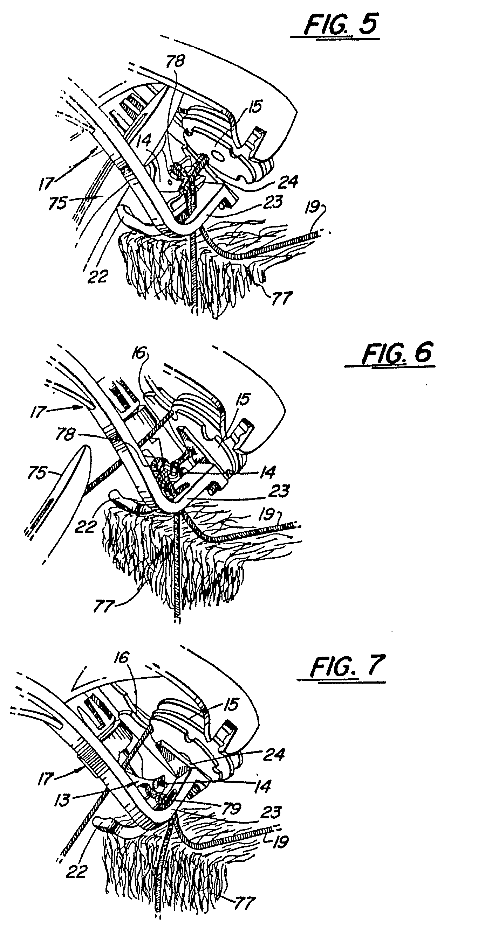

Figur 1 zeigt den Zustand, bei dem die Nadel 75 nach Fig. 3 mit einer Schnur 19 ausgerüstet ist, die in einem nicht dargestellten Schnurkasten in Vorrat gehalten wird, wobei vom vorhergehenden Knüpferzyklus her das eine Ende der Schnur 19 an der Schnurscheibe 15 mit Hilfe des Schnurhalters 16 festgelegt ist. Die Schnur 19 ist durch die Schnurführung 20 zwischen den Fingern 22 und 23 über die Oberseite des Ballens 77 geführt. Wenn der Ballen fertiggestellt ist erstreckt sich die Schnur 19 um den Umfang des Ballens 77. Zur Auslösung des Bindevorganges wird durch ein Messrad der Schnurknüpfer 1 in Gang gesetzt. Dabei schwenkt die Nadel 75 einwärts und legt einen zweiten Strang der Schnur 19 von unten um das rückwärtige Ende des Ballens 77 und durch die Schnurführung 20 sowie um den Knüpferhaken 13 der Schnurscheibe 15. Nach Fig. 4 wird die Scheibe 15 im Gegenuhrzeiger ausreichend gedreht, bis der Schnurhalter 16 beide Strangenden der Schnur 19 in der Scheibe halten kann. Darauf beginnt der Knüpferhaken 13 zu rotieren. Bei seiner Drehung gemäss Fig. 5 wird eine Schnurschlaufe 78 um die äussere Fläche des Knüpferhakens 13 gebildet, wobei der Backen 14 zur Aufnahme der Schnur 19 geöffnet ist. Der Abstreiferarm 17 wird gemäss Fig. 5 bewegt, wobei die Schneidklinge 24 an die Schnur 19 gelangt und diese zwischen dem Haken 13 und der Scheibe 15 durchtrennt. Im Augenblick des Zustandes nach Fig. 5 beginnt die Nadel 15 ihren Rückweg. Dabei wird das Schnurende in der Scheibe 15 für den nächsten Knüpfervorgang festgehalten. Der Backen 14 gemäss Fig. 6 wird geschlossen und hält das Ende der Schnur fest. Eine Weiterbewegung des Abstreiferarmes 17 führt dazu, dass das Abstreiferelement die Schnurschlaufe 78 vom Knüpferhaken 13 abstreift, während der Backen 14 die beiden Schnittenden der Schnur 19 zur Vorbereitung der Vervollständigung des Knotens 19 festhält. Auf diese Weise wird der Knoten 79 gemäss Fig. 7 geknüpft. Beim Abstreifen des Knotens vom Knüpferhaken 13 werden die abgeschnittenen Schnurenden vom Backen 14 abgezogen. Damit ist die Umbindung des Ballens 77 beendet.

Die Nadel 75 kehrt in ihre Stellung unterhalb der Presskammer zurück und lässt einen Strang der Schnur 19 in der Scheibe 15. Dieser Strang erstreckt sich durch die Presskammer und ist zur Aufnahme weiteren Materials zur Bildung des nächsten Ballens bereit. Die Koordinierte Bewegung der Teile wird durch übliche Getriebeeinrichtungen auf mechanischem Wege erreicht. Die angegebenen Abmessungen und Materialien sind bevorzugte Angaben und können durch andere Masse und Materialien ersetzt werden.

**Patentansprüche**

1. Schnurknüpfer für eine Ballenpresse oder dgl. mit einem drehbar angeordneten sichelförmigen Knüpferhaken (13) zur Bildung einer Schnurschlaufe und einem Abstreifarm (53) mit einer gabelförmigen Schnurführung (20) und einem gesonderten aus zwei Endbereichen (57,59) gebildeten Abstreiferelement (55), das an der Schnurführung angeordnet ist, dadurch gekennzeichnet, dass das Abstreiferelement (55) und die Schnurführung (20) aus nicht verformbarem Material bestehen und dass der eine Bereich (59) des Abstreiferelementes (55), am Scheitel (51) der gabelförmigen Schnurführung (20) des Abstreiferarmes (53) unter Zwischenschaltung von Beilegelementen (73) befestigt ist, die zur Einstellung des Abstandes zwischen Knüpferhaken (13) und dem Vorsprung (71) des anderen Bereiches (57) des Abstreiferelementes (55) auswechselbar sind.

2. Schnurknüpfer nach Anspruch 1, dadurch gekennzeichnet, dass die beiden Bereiche (57,59) des Abstreiferelementes (55) rechtwinklig zueinander ausgerichtet sind, wobei der eine Bereich (59) auf der Oberseite des Scheitels (51) der Schnurführung (20) befestigt ist.

**Revendications**

1. Noueur de ficelle pour presse à balles ou analogue, comportant un bec de noueur en forme de faucille ou de croissant (13) monté de façon rotative pour la formation d'une boucle de ficelle et un bras éjecteur (53) muni d'un guide-ficelle en forme de fourchette (20) et d'un élément éjecteur particulier (55) constitué par deux parties terminales (57,59), cet élément étant disposé sur le guide-ficelle, caractérisé en ce que l'élément éjecteur (55) et le guide-ficelle (20) sont constitués par un matériau non déformable et en ce que l'une des parties (59) de l'élément éjecteur (55) est fixée au sommet (51) du guide-ficelle en forme de fourchette (20) du bras éjecteur (55), avec interposition d'éléments formant cales d'épaisseur (73), qui sont interchangeables pour le réglage de l'écartement entre le bec de noueur (13) et la saillie (71) de l'autre partie (57) de l'élément éjecteur (55).

2. Noueur de ficelle suivant la revendication 1, caractérisé en ce que les deux parties (57, 59) de l'élément éjecteur (55) sont disposées perpendiculairement l'une à l'autre, l'une des parties (59) étant fixée sur la face supérieure du sommet (51) du guide-ficelle (20).

## Claims

1. A twine knotter for a bale press or the like, having a rotatably disposed sickle-shaped knotter hook (13) for forming a loop of twine and a stripper arm (53) having a forked twine guide (20) and a separate stripper element (55) which is formed from two end regions (57, 59) and which is arranged on the twine guide, characterized in that the stripper element (55) and the twine guide (20) comprise non-deformable material and that the one region (59) of the stripper element (55) is secured to the apex (51) of the forked twine guide (20) of the stripper (53), with the interposition of shim elements (73) which are interchangeable for adjusting the spacing between the knotter hook (13) and the projection (71) on the other region (57) of the stripper element (55).

2. A twine knotter according to claim 1 characterised in that the two regions (57, 59) of the stripper element (55) are disposed at a right angle to each other, wherein the one region (59) is fixed on the top of the apex (51) of the twine guide (20).

FIG. 1

FIG. 2

FIG. 3

FIG. 4

FIG. 5

FIG. 6

FIG. 7